Europäisches Patentamt

European Patent Office

Office européen des brevets

(11) Veröffentlichungsnummer: **0 274 679 B1**

# (12) EUROPÄISCHE PATENTSCHRIFT

(45) Veröffentlichungstag der Patentschrift: **24.06.92**

(21) Anmeldenummer: **87118338.0**

(22) Anmeldetag: **10.12.87**

(51) Int. Cl.⁵: **H04L 12/28**

(54) **Sende-Empfangs-Einrichtung für ein Busleitungssystem.**

(30) Priorität: **11.12.86 DE 3642374**

(43) Veröffentlichungstag der Anmeldung:
**20.07.88 Patentblatt 88/29**

(45) Bekanntmachung des Hinweises auf die
Patenterteilung:
**24.06.92 Patentblatt 92/26**

(84) Benannte Vertragsstaaten:
**AT BE CH DE ES FR GB IT LI NL SE**

(56) Entgegenhaltungen:
**EP-A- 0 171 555**
**FR-A- 2 570 563**

(73) Patentinhaber: **Siemens Nixdorf Informationssysteme AG
Otto-Hahn-Ring 6
W-8000 München 83(DE)**

(72) Erfinder: **Haug, Friedrich
Schönstrasse 61
W-8000 München 90(DE)**

(74) Vertreter: **Fuchs, Franz-Josef, Dr.-Ing. et al
Postfach 22 13 17
W-8000 München 22(DE)**

Anmerkung: Innerhalb von neun Monaten nach der Bekanntmachung des Hinweises auf die Erteilung des europäischen Patents kann jedermann beim Europäischen Patentamt gegen das erteilte europäische Patent Einspruch einlegen. Der Einspruch ist schriftlich einzureichen und zu begründen. Er gilt erst als eingelegt, wenn die Einspruchsgebühr entrichtet worden ist (Art. 99(1) Europäisches Patentübereinkommen).

## Beschreibung

Für einen schnellen Austausch von Digitalsignalen zwischen häufig wechselnden Gegenstellen (Stationen), beispielsweise zwischen Telekommunikations-Terminals, zwischen einer Datenverarbeitung dienenden Rechnern oder auch zwischen vermittlungstechnischen Prozessoren, finden vielfach Busleitungssysteme Anwendung, in denen die jeweils angeschlossenen Stationen über Sende- und Empfangseinrichtungen einen wahlfreien Zugriff (Random Access) zu dem Busleitungssystem haben. Die dabei von einer Station ausgesendeten Digitalsignale werden auf dem Bus nach beiden Seiten hin übertragen und nach Maßgabe vorangestellter Adressen nur von der (den) durch die Adresse(n) bezeichneten Station(en) aufgenommen. Für die Regelung des Zugriffs zum Busleitungssystem hat dabei besonders das sog. CSMA/CD-(Carrier Sense Multiple Access with Collision Detection)-Verfahren Bedeutung: Bevor eine Station zu senden beginnt, horcht sie in den Bus hinein, ob dort bereits ein Übertragungsvorgang stattfindet.

Zutreffendenfalls wartet sie zunächst dessen Ende ab; dann beginnt die betreffende Station zu senden, wobei sie zunächst weiter "mithört", bis sie nach einer gewissen Zeitspanne (round trip delay time) sicher ist, daß alle anderen Stationen ihr Senden bemerken konnten. Hat in gleicher Weise eine andere Station etwa gleichzeitig zu senden begonnen, so werden beide Stationen eine Kollision ihrer Digitalsignale mit denen der jeweils anderen Station feststellen, woraufhin sie ihren Sendevorgang jeweils abbrechen, um nach einer Zufallszeitspanne damit erneut zu beginnen.

Eine einfache Methode, mit der ein Mehrfachsenden erkannt werden kann, besteht darin, daß die aktive Station das von ihr gerade abzugebende (und abgegebene) Signal mit dem an ihrer Empangseinrichtung auf dem Busleitungssystem herrschenden Signalzustand vergleicht, wobei ein Signal(zustands)unterschied dann eine Kollision anzeigt. Die Erkennung eines solchen Signal-(zustands)unterschiedes setzt voraus, daß sich auf dem Busleitungssystem der eine Signalzustand physikalisch stets gegenüber dem anderen Signalzustand (bei Binärsignalen) durchsetzt. Diese Signalpriorität muß dabei unabhängig von der Anzahl etwa gleichzeitig aktiver Sender auch bei großen Leitungslängen von mehr als 100 m für jede Station gewährleistet sein.

In diesem Zusammenhang ist (aus EP-Al-0171555) ein Busleitungssystem mit zwei Signalleitern mit daran jeweils über zwei Differenzausgänge angeschlossenen Sendeeinrichtungen mit zwei Signalzuständen, deren einer einen Dominanzsignalzustand im Busleitungssystem bewirkt und in deren anderem die betreffende Sendeeinrichtung die beiden Signalleiter zumindest angenähert unbelastet läßt, bekannt, in dem bei den jeweils mit einem zwei Differenzausgänge aufweisenden Bussender gebildeten Sendeeinrichtungen die zwei Differenzausgänge über zwei zueinander gegensinnige, in dem genannten anderen Signalzustand im Sperrzustand befindliche Dioden mit den zwei Signalleitern verbunden sind.

Dieses Busleitungssystem, das eine galvanische Ankopplung der Sende-Empfangs-Einrichtungen an die beiden Signalleiter voraussetzt, gewährleistet unabhängig von dem Abstand und der Anzahl etwa gleichzeitig aktiver Sender sowie unter Vermeidung einer Überlastung der Senderausgänge bei entgegengesetzten Signalzuständen einen jeweils einheitlichen Signalzustand im Busleitungssystem und damit eine erhöhte Sicherheit in der Erkennung einer Kollision von Sendern beim gleichzeitigen Zugriff auf den Bus.

Bei Bussystemen mit größeren Leitungslängen, wie sie bei lokalen Netzen (Lokal Area Networks LAN) erforderlich sind, führen die Leitungsdämpfung und die Leistungsentnahme durch Teilnehmerstationen längs der Busleitung zu einer erheblichen Verminderung der Signalamplituden, was jeweils für eine bestimmte Datenrate und Teilnehmeranzahl die maximal zulässige Leitungslänge begrenzt.

Grundsätzlich kann man die maximal zulässige Leitungslänge durch Einsatz eines Busleitungskabels mit vergrößertem Leiterquerschnitt und damit mit verringerter Dämpfung erhöhen; dies erfordert indessen bei einer entsprechenden Erweiterung eines schon installierten Busleitungssystems einen Ersatz des bisherigen Busleitungskabels durch ein entsprechendes neues Busleitungskabel oder bei Neuinstallation eines Busleitungssystems von vornherein ein entsprechend aufwendiges Busleitungskabel selbst dann, wenn die anfängliche Ausdehnung des Busleitungssystems ein solches aufwendiges Kabel noch gar nicht erforderlich machen würde.

Die Erfindung zeigt demgegenüber einen anderen Weg zu einem Busleitungssystem erhöhter maximal zulässiger Distanz zwischen den Teilnehmerstationen.

Die Erfindung betrifft eine Sende-Empfangs-Einrichtung für ein Busleitungssystem mit zwei Signalleitern, mit einer über Differenzausgänge zu den Signalleitern führenden, zweier Signalzustände fähigen Differenz-Busleitungssendeeinrichtung und einer zwei mit den Signalleitern verbundene Differenzeingänge aufweisenden Differenz-Busleitungsempfangseinrichtung, wobei ein Übertrager mit einer in zwei zumindest angenähert gleiche Teile unterteilten Primärwicklung und einer mit ihren beiden Enden an den beiden Signalleitern liegenden Sekundärwicklung vorgesehen ist, bei dem die beiden einander abgewandten Enden der beiden Primärwicklungshälften zu wenigstens einem Differenz-Busleitungsempfänger führen und bei dem zwischen die beiden einander zugewandten Enden der beiden Primärwicklungshälften ein Widerstand eingefügt ist; diese Sende-Empfangs-Einrichtung ist erfindungsgemäß dadurch gekennzeichnet, daß ein Übertrager mit einer mit der Primärwicklung zumindest angenähert windungszahlgleichen Sekundärwicklung vorgesehen ist, bei dem die beiden Enden der ersten Primärwicklungshälfte an die beiden Differenzausgänge wenigstens eines ersten Differenz-Busleitungssenders angeschlossen sind und bei dem die beiden Enden der zweiten Primärwicklungshälfte an die beiden Differenzausgänge wenigstens eines dem ersten Differenz-Busleitungssender eingangsseitig parallelgeschalteten zweiten Differenz-Busleitungssenders angeschlossen sind, wobei der Widerstandswert des zwischen die beiden Primärwicklungshälften eingefügten Widerstands groß gegenüber dem Busleitungssender-Ausgangswiderstand und klein gegenüber dem Busleitungsempfänger-Eingangswiderstand ist.

Es sei an dieser Stelle bemerkt, daß (aus FR-A-2 570 563) eine Sende-Empfangs-Einrichtung für ein Busleitungssystem mit zwei Signalleitern mit einer über Differenzausgänge zu den Signalleitern führenden, zweier Signalzustände fähigen Differenz-Busleitungssendeeinrichtung und einer zwei mit den Signalleitern verbundene Differenzeingänge aufweisenden Differenz-Busleitungsempfangseinrichtung bekannt ist, bei der ein Übertrager mit einer in zwei gleiche Teile unterteilten Primärwicklung und einer mit ihren beiden Enden an den beiden Signalleitern liegenden Sekundärwicklung vorgesehen ist, wobei die beiden einander abgewandten Enden der beiden - jeweils mit der Sekundärwicklung windungszahlgleichen - Primärwicklungshälften zu dem Differenz-Busleitungsempfänger führen und wobei zwischen die beiden einander zugewandten Enden der beiden Primärwicklungshälften ein Widerstand eingefügt ist; nähere Berührungspunkte mit der vorliegenden Erfindung sind nicht gegeben.

Die Erfindung bringt mit einer Verdopplung der von einer sendenden Teilnehmerstation in das Busleitungssystem eingekoppelten Sendespannung ohne gleichzeitige Halbierung der in einer nicht sendenden Teilnehmerstation wirksamen Empfangsspannung den Vorteil einer erhöhten maximal zulässigen Ausdehnung eines Busleitungssystems und/oder einer erhöhten zulässigen Datenrate allein mit stationsindividuellen Mitteln, ohne Eingriff in das Busleitungskabel selbst, mit sich. Dabei sind zweckmäßigerweise in weiterer Ausgestaltung der Erfindung zwei einander eingangs- und ausgangsseitig parallelgeschaltete erste Differenz-Busleitungssender und zwei einander eingangs- und ausgangsseitig parallelgeschaltete zweite Differenz-Busleitungssender vorgesehen, um so eine Reduzierung der Signalamplitude durch die mit dem Quadrat des Übersetzungsverhältnisses bewirkte Transformierung des Lastwiderstandes auf die Primärseite des Übertrages zu vermeiden.

Vorteilhafterweise kann den über eine Sende-Empfangseinrichtung gemäß der Erfindung transformatorisch an das Busleitungssystem angekoppelten Teilnehmerstationen auch eine Zugriffsregelung nach dem CSMA/CD-Verfahren dadurch ermöglicht werden, daß in weiterer Ausgestaltung der Erfindung sendeseitig nach jedem Pegelübergang der jeweils zugeführten Sendedaten jeweils nur für einen Bruchteil einer Bitzeitspanne, insbesondere für etwa ein Viertel einer Bitzeitspanne, entriegelte und dabei je nach dem neuen Signalpegel einen positiven oder negativen Differenzspannungsimpuls abgebende Differenz-Busleitungssender vorgesehen sind, die sich im übrigen Teil jeder Bitzeitspanne, insbesondere für etwa drei Viertel einer Bitzeitspanne, in einem Ruhezustand hohen Innenwiderstands (Tristate-Zustand) befinden, und/oder empfangsseitig zwei in zueinander entgegengesetztem Sinne an die einander abgewandten Enden der beiden Primärwicklungshälften angeschlossene Differenz-Busleitungsempfänger sowie ein mit seinen beiden Eingängen an die Ausgänge der beiden Differenz-Busleitungsempfänger angeschlossenes, bistabiles RS-Kippglied vorgesehen sind.

Weitere Besonderheiten der Erfindung werden aus der nachfolgenden näheren Erläuterung der Erfindung anhand der Zeichnungen ersichtlich. Dabei zeigen

FIG 1 schematisch ein Busleitungssystem mit zugehörigen Teilnehmerstationen und

FIG 2 schaltungstechnische Einzelheiten der Sende-Empfangs-Einrichtung einer solchen Teilnehmerstation;

FIG 3 zeigt weitere schaltungstechnische Einzelheiten eines bevorzugten Ausführungsbeispiels einer solchen Sende-Empangs-Einrichtung gemäß der Erfindung, und

FIG 4 verdeutlicht Signalzustände darin.

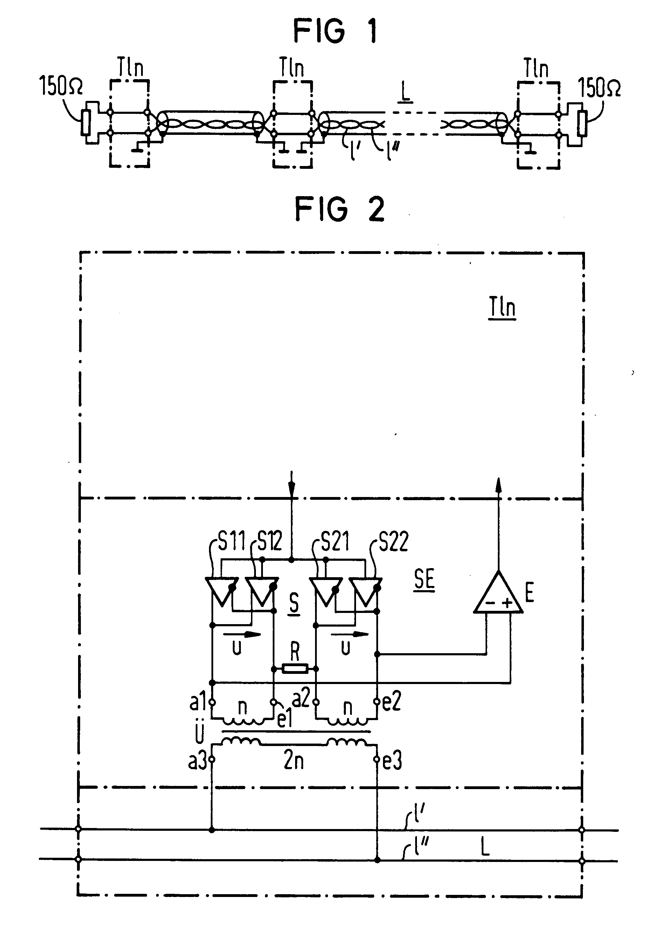

Die Zeichnung FIG 1 zeigt schematisch ein serielles Busleitungssystem L mit zwei Signalleitern 1′, 1″ und einem Leitungsschirm (Masse, Erde); ein solches Busleitungssystem kann vorzugsweise mit einem zwei verdrallte Adern aufweisenden geschirmten (Twisted-Pair-)Kabel mit einem Wellenwiderstand von beispielsweise 150 Ohm, beispielsweise mit einem Kabel 2Y(St)Ylx2x0,5/2,2-150, realisiert sein, wobei die zwei verdrallten Adern die beiden Signalleiter 1′, 1″ bilden. An das Busleitungssystem L sind Teilnehmerstationen Tln jeweils über eine Sende-Empfangs-Einrichtung angeschlossen, wie dies aus FIG 2 näher ersichtlich ist.

Gemäß FIG 2 weist eine solche Teilnehmerstation Tln, bei der es sich beispielsweise um ein Telekommunikations-Endgerät, um einen Rechner oder um einen Vermittlungsprozessor handeln kann, eine Sende-Empfangs-Einrichtung SE mit zwei einander eingangs- und ausgangsseitig parallelgeschalteten ersten Differenz-Busleitungssendern S11, S12 und zwei einander eingangs- und ausgangsseitig parallelgeschalteten zweiten Differenz-Busleitungssendern S21, S22, einem Differenz-Busleitungsempfänger E und einem Übertrager Ü auf, der eine in zwei zumindest angenähert gleiche Teile unterteilte Primärwicklung n-n und eine mit der Primärwicklung n-n zumindest angenähert windungszahlgleiche, mit ihren beiden Enden a3, e3 and den beiden Signalleitern 1', 1" liegende Sekundärwicklung 2n besitzt. Dabei sind die beiden Enden a1, e1 der ersten Primärwicklungshälfte an die beiden Differenzausgänge der zwei ersten Differenz-Busleitungssender S11, S12 angeschlossen, und die beiden Enden a2, e2 der zweiten Primärwicklungshälfte sind an die beiden Differenzausgänge der zwei zweiten Differenz-Busleitungssender S21, S22 angeschlossen. Die beiden einander abgewandten Enden a1, e2 der beiden Primärwicklungshälften führen zum Busleitungsempfänger E; zwischen die beiden einander zugewandten Enden e1, a2 der beiden Primärwicklungshälften ist ein Widerstand R eingefügt, dessen Widerstandswert groß gegenüber dem Busleitungssender-Ausgangswiderstand und klein gegenüber dem Busleitungsempfänger-Eingangswiderstand ist.

Durch das angegebene Widerstandsverhältnis von Widerstand R und Busleitungssender-Ausgangswiderstand wird erreicht, daß die von den an die beiden Primärwicklungshälften angeschlossenen Differenz-Busleitungssendern abgegebenen Sendespannungen u jeweil primärwicklungshälftenindividuell, d.h. gewissermaßen parallel, zur Sekundärseite des Übertragers Ü hin übertragen und somit mit - dem Übersetzungsverhältnis n:2n entsprechend - verdoppelter Spannungsamplitude in das Busleitungssystem L eingekoppelt werden; die so in Senderichtung gegebene Parallelwirkung der beiden Primärwicklungshälften und der daran angeschlossenen Differenz-Busleitungssender bringt zugleich eine Halbierung des sendeseitig wirksamen Innenwiderstand mit sich. Wenn dann, wie dies auch in FIG 2 dargestellt ist, gerade zwei einander parallelgeschaltete Differenz-Busleitungssender S11, S12 bzw. S21, S22 je Primärwicklungshälfte vorgesehen sind, wird eine nochmalige Halbierung des sendeseitig wirksamen Innenwiderstands bewirkt, so daß damit die mit dem Quadrat des Übersetzungsverhältnisses 2n:n bewirkte Transformierung des Busleitungs-Lastwiderstandes von der Sekundärseite des Übertragers Ü auf dessen Primärseite gerade ausgeglichen wird. Dabei erfordern die insgesamt vier Differenz-Busleitungssender S11, S12, S21, S22 praktisch keinen Mehraufwand, da handelsübliche Busleitungssender-Bausteine, etwa des Typs SN74ALS1631, ohnehin vier solche Busleitungssender enthalten.

In der umgekehrten Übertragungsrichtung (Empfangsrichtung) wird durch das angegebene Widerstandsverhältnis von Widerstand R und Busleitungsempfänger-Eingangswiderstand erreicht, das die beiden Primärwicklungshälften in ihrer eigentlichen Serienschaltung zur Wirkung kommen und die auf den Signalleitern 1', 1" des Busleitungssystems L ankommenden Signalspannungen mit dem Übersetzungsverhältnis 1:1 zum Busleitungsempfänger E hin übertragen werden. Da somit im Ergebnis die in Senderichtung erzielte Spannungsverdopplung nicht durch eine Spannungshalbierung im Empfangsrichtung wieder rückgängig gemacht wird, kann auch bei einem mit z. B. 300 m Kabellänge relativ ausgedehnten und dabei durch z. B. 16 Teilnehmerstationen belasteten Busleitungssystem sichergestellt werden, daß jeder Empfänger die Signalspannungen noch mit einer ein sicheres Ansprechen ermöglichenden Amplitude empfängt.

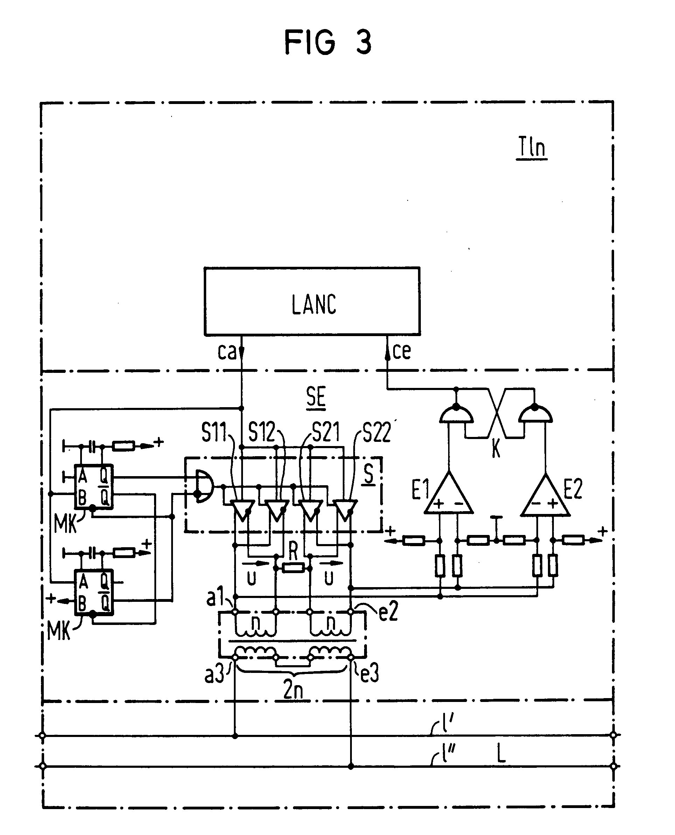

Die einzelnen Differenz-Busleitungssender S11, S12, S21, S22 werden zweckmäßigerweise nach jedem Pegelübergang der zugeführten Sendedaten jeweils nur für einen Bruchteil einer Bitzeitspanne entriegelt, wobei sie je nach dem neuen Signalzustand einen positiven oder negativen Differenz-Spannungsimpuls u abgeben. Solche Differenz-Busleitungssender können mit neben zwei Signalzuständen auch noch einen Ruhezustand als dritten Zustand aufweisenden Tristate-Busleitungssendern eines Busleitungssender-Bausteins beispielsweise des Typs SN74ALS1631 (TI) realisiert sein, die an ihren Entriegelungseingängen nach jedem Pegelübergang der am Sendedaten-Eingang der Differenz-Busleitungssender anliegenden Sendedaten mit einem jeweils nur einen Bruchteil einer Bitzeitspanne andauernden Entriegelungsimpuls beaufschlagt werden; solche Entriegelungsimpluse können dabei aus den Sendedaten beispielsweise mit Hilfe zweier bei einem Pegelübergang des einen bzw. des anderen Vorzeichens aktivierter monostabiler Kippglieder etwa des Typs 74LS123 abgeleitet werden, wie sie in FIG 3 mit MK bezeichnet sind.

Empfangsseitig werden dabei, wie dies ebenfalls in FIG 3 weiter ins einzelne gehend dargestellt ist, zwei in zueinander entgesetztem Sinne an den Übertrager Ü und über diesen an die Signalleiter 1', 1" des Busleitungssystems L angeschlossene Differenz-Busleitungsempfänger E1, E2 (beispielsweise des Typs SN75173) vorgesehen, die ausgangsseitig an den S- bzw. R-Eingang eines bistabilen RS-Kippgliedes K angeschlossen sind, das gemäß FIG 3 mit zwei kreuzgekoppelten NAND-Gliedern beispielsweise des Typs SN74ALS00 realisiert sein kann. Mit dem Ausgangs des RS-Kippgliedes K ist in der in FIG 3 skizzierten Teilnehmerstation Tln der Empfangsdaten-Eingang ce eines LAN-Controllers LANC (beispielsweise des Typs 82588) verbunden, dessen Sendedaten-Ausgang ca zum Sendedaten-Eingang der Differenz-Busleitungssender S11, S12, S21, S22 führt.

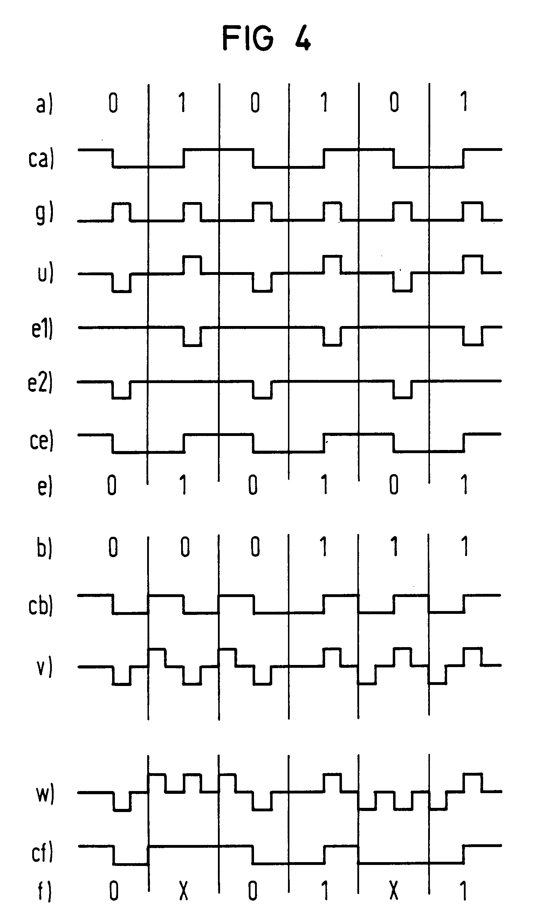

Nach jedem Pegelübergang der vom Ausgang ca des LAN-Controllers LANC kommenden Sendedaten, wie sei beispielsweise, von einer in FIG 4.a) angegebenen Bitfolge ausgehend, in Fig 4.ca) angedeutet sind, wird von dem einen oder dem anderen monostabilen Kippglied her der Entriegelungseingang des Differenz-Busleitungssenders S mit einem Entriegelungsimpuls von - bei Bitzeitspannen von z.B. 1 $\mu$s - etwa 250 ns Dauer beaufschlagt, wobei FIG 4.g) eine Folge solcher Entriegelungsimpulse erkennen läßt. Auf ihm am Sendedaten-Eingang zugeführte, im Beispiel Manchester-kodiert vorliegende Sendedaten gemäß Fig 4.ca) erzeugt jeder Differenz-Busleitungssender S dann entsprechende positive bzw. negative Differenzspannungsimpulse u (s. FIG 3), wie sie in FIG 4.u) dargestellt sind. In jeder Teilnehmerstation Tln (in FIG 1) des Busleitungssystems werden empfangsseitig die Differenzspannungsimpulse je nach ihrem jeweiligen Vorzeichen von dem einen bzw. dem anderen Differenz-Busleitungsempfänger (E1 bzw. E2 in FIG 3) aufgenommen, wie dies in FIG 4.e1) und FIG 4.e2) angedeutet ist; das durch die Ausgangssignale der beiden Differenz-Busleitungsempfänger E1, E2 gesetzte bzw. rückgesetzte, RS-Kippglied restituiert daraus wieder die ursprüngliche Datenform, wie dies aus FIG 4.ce) und FIG 4.e) ersichtlich wird.

Zwischen zwei aufeinanderfolgenden Differenzspannungsimpulsen u (in FIG 4.u) sind die Differenz-Busleitungssender S11...S22 einer Teilnehmerstation Tln (in FIG 1 und FIG 3) in ihrem Ruhezustand hohen Innenwiderstands, wobei dieser Ruhezustand in Abhängigkeit von der Gleichheit oder Ungleichheit aufeinanderfolgender Bits im Beispiel etwa 250 ns oder 750 ns andauert. Treten nun in einem Kollisionsfall in diesen Impulslücken der Sendeeinrichtung S (in FIG 3) einer gerade betrachteten Teilnehmerstation Tln (in FIG 3) in entsprechender Weise von einer anderen Teilnehmerstation Tln (in FIG 1) ausgesendete Differenzspannungsimpulse auf dem Busleitungssystem L auf, so werden auch diese Differenzspannungsimpulse von dem einen oder anderen Differenz-Busleitungsempfänger E1, E2 (in FIG 3) der gerade betrachteten Teilnehmerstation Tln (in FIG 3) aufgenommen mit der Folge, daß die RS-Kippstufe K zusätzliche Setz- bzw. Rücksetzimpulse erhält, so daß es am Empfangsdaten-Eingang ce) des LAN-Controllers LANC zu Verfälschungen der Daten kommt; so treten beispielsweise bei im Manchester-Code dargestellten Daten Bitzellen auf, bei denen der für den Manchester-Code signifikante Pegelübergang in der Bitzellenmitte fehlt: Es sei angenommen, daß gleichzeitig damit, daß die gerade betrachtete Teilnehmerstation (Tln in FIG 3) die in FIG 4.a) und FIG 4.ca) angegebene Bitfolge in das Busleitungssystem L einspeist, auch eine andere Teilnehmerstation (Tln in FIG 1) auf das Busleitungssystem L zugreift und in dieses eine andere Bitfolge einspeist, wie sei beispielsweise in FIG 4.b) und FIG 4.cb) angegeben sein möge. Diese andere Teilnehmerstation beaufschlagt demzufolge das Busleitungssystem mit einer entsprechenden anderen Differenzspannungsimpulsfolge, wie sie im Beispiel in FIG 4.v) skizziert ist. An den beiden Differenz-Leitungsempfängern E1, E2 der bisher schon betrachteten Teilnehmerstation Tln (in FIG 3) wirkt sich dann im Ergebnis eine durch Überlagerung der Differenzspannungsimpulsfolgen der beiden in Kollision miteinander auf das Busleitungssystem L zugreifenden Teilnehmerstationen bedingte Differenzspannungsimpulsfolge aus, wie sie in Fig 4.w) angedeutet ist, wobei die Darstellung in FIG 4 insgesamt von einer bei der betrachteten Teilnehmerstation gegebenen Zeitgleichheit der Bitzellen beider Teilnehmerstationen ausgeht. Am Ausgang der den beiden Differenz-Leitungsempfängern E1, E2 nachgeschalteten bistabilen Kippstufe K tritt daher ein Signal auf, wie es in FIG 4.cf) skizziert ist, und damit eine Bitfolge, wie sie in FIG 4.f) angegeben ist; dabei sind in FIG 4.f) mit X kollisionsbedingt verfälschte Bitzellen bezeichnet, anhand derer somit die Kollision gleichzeitig auf das Busleitungssystem L zugreifender Teilnehmerstationen Tln (in Fig 1) erkennbar ist.

## Patentansprüche

1. Sende-Empfangs-Einrichtung (SE) für ein Busleitungssystem (L) mit zwei Signalleitern (1', 1"), mit einer über Differenzausgänge zu den Signalleitern (1', 1") führenden, zweier Signalzustände fähigen Differenz-Busleitungssendeeinrichtung (S) und einer zwei mit den Signalleitern (1', 1") verbundene Differenzeingänge aufweisenden Differenz-Busleitungsempfangseinrichtung (E), wobei ein Übertrager (Ü) mit einer in zwei zumindest angenähert gleiche Teile unterteilten Primärwicklung (n - n) und einer mit ihren beiden Enden (a3, e3) an den beiden Signalleitern (1', 1") liegenden Sekundärwicklung (2n) vorgesehen ist, bei dem die beiden einander abgewandten Enden (a1, e2) der beiden Primärwicklungshälften zu wenigstens einem Differenz-Busleitungsempfänger(E1, E2) führen und bei dem zwischen die beiden einander zugewandten Enden (e1, a2) der beidem Primärwicklungshälften ein Widerstand (R) eingefügt ist,
**dadurch gekennzeichnet,**
daß ein Übertrager (Ü) mit einer mit der Primärwicklung (n - n) zumindest angenähert windungszahlgleichen Sekundärwicklung vorgesehen ist,
bei dem die beiden Enden (a1, e1) der ersten Primärwicklungshälfte (n) an die beiden Differenzausgänge wenigstens eines ersten Differenz-Busleitungssenders (S11, S12) angeschlossen sind und
bei dem die beiden Enden (a2, e2) der zweiten Primärwicklungshälfte (n) an die beiden Differenzausgänge wenigstens eines dem ersten Differenz-Busleitungssender (S11, S12) eingangsseitig parallelgeschalteten zweiten Differenz-Busleitungssenders (S21, S22) angeschlossen sind,
wobei der Widerstandswert des zwischen die beiden Primärwicklungshälften eingefügten Widerstands (R) groß gegenüber dem Busleitungssender-Ausgangswiderstand und klein gegenüber dem Busleitungsempfänger-Eingangswiderstand ist.

2. Sende-Empfangs-Einrichtung nach Anspruch 1,
**dadurch gekennzeichnet,**
daß zwei einander eingangs- und ausgangsseitig parallelgeschaltete erste Differenz-Busleitungssender (S11, S12) und zwei einander eingangs- und ausgangsseitig parallelgeschaltete zweite Differenz-Busleitungssender (S21, S22) vorgesehen sind.

3. Sende-Empfangs-Einrichtung nach Anspruch 1 oder 2,
**dadurch gekennzeichnet,**
daß sendeseitig nach jedem Pegelübergang der jeweils zugeführten Sendedaten jeweils nur für einen Bruchteil einer Bitzeitspanne entriegelte und dabei je nach dem neuen Signalpegel einen positiven oder negativen Differenzspannungsimpuls abgebende Differenz-Busleitungssender (S) vorgesehen sind, die sich im übrigen Teil jeder Bitzeitspanne in einem Ruhezustand hohen Innenwiderstands (Tristate-Zustand) befinden, und/oder daß empfangsseitig zwei in zueinander entgegengesetztem Sinne an die einander abgewandten Enden (a1,e2) der beiden Primärwicklungshälften (n,n) angeschlossene Differenz-Busleitungsempfänger (E1, E2) sowie ein mit seinen beiden Eingängen an die Ausgänge der beiden Differenz-Bunsleitungsempfänger (E1, E2) angeschlossenes, bistabiles RS-Kippglied (K) vorgesehen sind.

4. Sende-Empfangs-Einrichtung nach Anspruch 3,
**dadurch gekennzeichnet,**
daß jeweils nur für etwa ein Viertel einer Bitzeitspanne entriegelte und einen positiven oder negativen Differenzspannungsimpuls abgebende und für etwa drei Viertel einer Bitzeitspanne in einem Ruhezustand hohen Innenwiderstands (Tristate-Zustand) befindliche Differenz-Busleitungssender (S) vorgesehen sind.

5. Sende-Empfangs-Einrichtung nach einem der vorhergehenden Ansprüche,
**dadurch gekennzeichnet,**
daß der Sendedaten-Eingang der Differenz-Busleitungssender (S) mit dem Sendedaten-Ausgang (ca) und der Ausgang des RS-Kippgliedes (K) mit dem Empfangsdaten-Eingang (ce) eines LAN-Controllers (LANC) verbunden ist.

**Claims**

1. Transmitting/receiving device (SE) for a bus line system (L) with two signal conductors (1', 1"), with a differential bus line transmitting device (S) capable of two signal states and leading to the signal conductors (1', 1") via differential outputs, and a differential bus line receiving device (E) exhibiting two differential inputs connected to the signal conductors (1', 1"), in which arrangement a transformer (Ü) is provided with a primary winding (n - n) subdivided into two at least approximately equal parts and a secondary winding (2n) connected with its two ends (a3, e3) to the two signal conductors (1', 1"), in which the two ends (a1, e2), facing away from each other, of the two primary winding halves lead to at least one differential bus line receiver (E1, E2), and in which a resistor (R) is inserted between the two ends (e1, a2), facing each other, of the two primary winding halves, characterised in that a transformer (Ü) is provided with a secondary winding with a number of a turns which is at least approximately equal to the primary winding (n - n), in which the two ends (a1, e1) of the first primary winding half (n) are connected to the two differential outputs of at least a first differential bus line transmitter (S11, S12) and in which the two ends (a2, e2) of the second primary winding half (n) are connected to the two differential outputs of at least a second differential bus line transmitter (S21, S22) which is connected in parallel with the first differential bus line transmitter (S11, S12) at the input, the resistance value of the resistor (R) inserted between the two primary winding halves being large compared with the output impedance of the bus line transmitter and small compared with the input impedance of the bus line receiver.

2. Transmitting/receiving device according to Claim 1, characterised in that two first differential bus line transmitters (S11, S12) which are connected in parallel with one another at the input and output end and two second differential bus line transmitters (S21, S22) which are connected in parallel with one another at the input and output end are provided.

3. Transmitting/receiving device according to Claim 1 or 2, characterised in that at the transmitting end, differential bus line transmitters (S) are provided which are in each case unlatched only for a fraction of a bit period after each level transition of the transmit data in each case supplied and during this process output a positive or negative differential voltage pulse depending on the new signal level and which are in a rest state of high internal impedance (tristate state) in the remaining part of each bit period, and/or in that at the receiving end, two differential bus line receivers (E1, E2) connected in mutually opposite direction to the ends (a1, e2), facing away from each other, of the two primary winding halves (n, n) and a bistable RS flip flop (K) connected with its two inputs to the outputs of the two differential bus line receivers (E1, E2) are provided.

4. Transmitting/receiving device according to Claim 3, characterised in that in each case differential bus line transmitters (S) are provided which are unlatched for only about a quarter of a bit period and output a positive or negative differential voltage pulse and are in a rest state of high internal impedance (tristate state) for about three quarters of a bit period.

5. Transmitting/receiving device according to one of the preceding claims, characterised in that the transmit data input of the differential bus line transmitters (S) is connected to the transmit data output (ca) and the output of the RS flip flop (K) is connected to the receive data input (ce) of a LAN controller (LANC).

**Revendications**

1. Dispositif d'émission-réception (SE) pour un système de ligne formant bus (L) comportant deux conducteurs de transmission de signaux (1',1"), un dispositif (S) d'émission de différence de la ligne formant bus, raccordé par l'intermédiaire de sorties de différence aux conducteurs de transmission de signaux (1',1") et apte à transmettre deux états de signaux, et un dispositif (E) de réception de différence de la ligne formant bus, qui possède deux entrées de différence raccordées aux lignes de transmission de signaux (1',1"),
et dans lequel il est prévu un transformateur (Ü) possédant un enroulement primaire (n - n) subdivisé en deux parties approximativement égales et un enroulement secondaire (2n) raccordé par ses deux extrémités (a3,e3) aux deux lignes de transmission de signaux (1',1"),
et dans lequel les deux extrémités (a1,e2), situées à l'opposé l'une de l'autre, des deux moitiés de l'enroulement primaire sont raccordées à au moins un récepteur de différence (E1,E2) de la ligne de transmission de bus,
et dans lequel une résistance (R) est insérée entre les deux extrémités (e1,a2), tournées l'une vers l'autre, des deux moitiés de l'enroulement primaire,
caractérisé par le fait
qu'il est prévu un transformateur (Ü) comportant un enroulement secondaire possédant au moins approximativement le même nombre de spires que l'enroulement primaire (n-n),
dans lequel les deux extrémités (a1,e1) de la première moitié (n) de l'enroulement primaire sont raccordées aux deux sorties de différence d'au moins un premier émetteur de différence (S11,S12) de la ligne formant bus, et
dans lequel les deux extrémités (a2,e2) de la seconde moitié (n) de l'enroulement primaire sont raccordées aux deux sorties de différence d'au moins un second émetteur de différence (S21,S22) de la ligne formant bus, branchée en parallèle, côté entrée, avec le premier émetteur de différence (S11,S12) de la ligne formant bus,
et dans lequel la valeur résistive de la résistance (R) insérée entre les deux moitiés de l'enroulement primaire est suffisamment élevée par rapport à la résistance de sortie de l'émetteur de la ligne formant bus et suffisamment faible par rapport à la résistance d'entrée du récepteur de la ligne formant bus.

2. Dispositif d'émission-réception suivant la revendication 1, caractérisé par le fait qu'il est prévu deux premiers émetteurs de différence (S11,S12) de la ligne formant bus, branchés en parallèle côté entrée et côté sortie, et deux seconds émetteurs de différence (S21,S22) de la ligne formant bus, branchés en parallèle côté entrée et côté sortie.

3. Dispositif d'émission-réception suivant la revendication 1 ou 2, caractérisé par le fait que, côté émission, il est prévu, après chaque transition de niveau des données d'émission respectivement envoyées, des émetteurs de différence (S) de la ligne formant bus, déverrouillés respectivement uniquement pendant une fraction d'un intervalle de temps de bits et délivrant, respectivement après le nouveau niveau du signal, une impulsion de tension différentielle positive ou négative, et qui, pendant l'autre partie de chaque intervalle de temps de bits, sont situés dans un état de repos correspondant à une résistance interne élevée (état Tristate), et/ou que, côté réception, il est prévu deux récepteurs de différence (E1,E2) de la ligne formant bus, raccordés en des sens respectivement opposés, aux extrémités (a1,e2), situées à l'opposé l'une de l'autre, des deux moitiés (n,n) de l'enroulement primaire, ainsi qu'un circuit à bascule bistable de type RS (K), raccordé par ses deux entrées aux sorties des deux récepteurs de différence (E1,E2) de la ligne formant bus.

4. Dispositif d'émission-réception suivant la revendication 3, caractérisé par le fait qu'il est prévu des émetteurs de différence (S) de la ligne formant bus, déverrouillés respectivement seulement pendant environ un quart d'un intervalle de temps d'un bit et délivrant une impulsion de tension différentielle positive ou négative et placés dans un état de repos correspondant à une résistance interne élevée (état Tristate) approximativement pendant les trois quarts d'un intervalle de temps d'un bit.

5. Dispositif d'émission-réception suivant l'une des revendications précédentes, caractérisé par le fait que l'entrée des données d'émission des émetteurs de différence (S) de la ligne formant bus est raccordée à la sortie (ca) des données d'émission et que la sortie de l'étage à bascule de type RS (K) est raccordée à l'entrée (ce) des données de réception d'un contrôleur LAN (LANC).

# FIG 1

# FIG 2

# FIG 3

EP 0 274 679 B1

# FIG 4